# EUROPÄISCHE PATENTANMELDUNG

(11) **EP 0 624 534 A1**
(43) Veröffentlichungstag der Anmeldung: **17.11.1994**
(21) Anmeldenummer: 94890082.4
(22) Anmeldetag: 06.05.1994
(51) Int. Cl.: B65G 65/00, B23Q 7/10

(54) **Vorrichtung zum Handhaben von auf stapelbaren Paletten gelagerten Werkstücken**

(30) Priorität: 10.05.1993 AT 910/93
(71) Anmelder: Miba Sintermetall Aktiengesellschaft, A-4663 Laakirchen (AT)
(72) Erfinder: Sonntag, Konrad, A-4810 Gmunden (AT)
(74) Vertreter: Hübscher, Heiner, Dipl.-Ing.

(57) **Zusammenfassung**

Es wird eine Vorrichtung zum Handhaben von auf stapelbaren Paletten gelagerten Werkstücken mit wenigstens einem in zwei Koordinatenachsen parallel zu den Paletten verfahrbaren Greifer (7), der die zu bearbeitenden Werkstücke von der jeweils obersten Palette (10a) eines Palettenstapels (10) abnimmt und bearbeitete Werkstücke an den durch die Werkstückentnahme entstandenen Leerstellen dieser Palette (10a) absetzt, und mit einer Palettenübergabeein richtung zwischen zwei Palettenstapeln (9, 10) beschrieben, wobei diese Vorrichtung dadurch gekennzeichnet ist, daß die beiden Palettenstapel (9, 10) mit Abstand übereinander vorgesehen sind, daß der Greifer (17) im Abstandsbereich zwischen den beiden Palettenstapeln (9, 10) verfahrbar ist und daß die Palettenübergabeeinrichtung aus einer Hubeinrichtung (3) fur den unteren Palettenstapel (10) und einer wahlweise zurückziehbaren Auflage (8) für den oberen Palettenstapel (9) besteht, wobei sich der größte Hub der Hubeinrichtung (3) zumindest bis zur Auflage (8) für den oberen Palettenstapel (9) erstreckt.

## Beschreibung

Die Erfindung bezieht sich auf eine Vorrichtung zum Handhaben von auf stapelbaren Paletten gelagerten Werkstücken mit wenigstens einem in zwei Koordinatenachsen parallel zu den Paletten verfahrbaren Greifer, der die zu bearbeitenden Werkstücke von der jeweils obersten Palette eines Palettenstapels abnimmt und bearbeitete Werkstücke an den durch die Werkstückentnahme entstandenen Leerstellen dieser Palette absetzt, und mit einer Palettenübergabeeinrichtung zwischen zwei Palettenstapeln.

Um auf gestapelten Paletten gelagerte Werkstücke handhaben zu können, ist es bekannt, die zu bearbeitenden Werkstücke von der jeweils obersten Palette eines Palettenstapels für solche Werkstücke mit Hilfe eines Greifers abzunehmen, der oberhalb des Palettenstapels in zwei Koordinatenachsen parallel zu den Paletten verfahren werden kann und die abgenommenen Werkstücke einem Förderer zur Weiterleitung an eine Bearbeitungsstation übergibt. Die über einen weiteren Förderer von der Bearbeitungsstation angeförderten, bereits bearbeiteten Werkstücke werden mit Hilfe des Greifers an den durch die Werkstückentnahme entstandenen Leerstellen der Palette abgesetzt, bis alle Werkstücke auf der obersten Palette bearbeitet sind. In der Folge kann die oberste Palette an einen zweiten Palettenstapel für die bearbeiteten Werkstücke übergeben werden, und zwar mit Hilfe einer Palettenübergabeeinrichtung. Nachteilig bei diesen bekannten Vorrichtungen ist vor allem, daß mit einem Platzbedarf zu rechnen ist, der einer Grundfläche für zumindest zwei Palettenstapel, einen für die zu bearbeitenden und einen für die bearbeiteten Werkstücke, entspricht, wobei zu berücksichtigen ist, daß zwischen den beiden Palettenstapeln noch die Palettenübergabeeinrichtung vorgesehen werden muß.

An diesem Platzbedarf ändert sich auch nichts, wenn zwei Palettenteilstapel übereinander angeordnet werden (DE-A 3 437 883), wobei vom oberen Teilstapel jeweils die unterste Palette auf eine Auflage abgesenkt wird, von der sie aus dem Stapelbereich seitlich ausgeschoben wird, damit die auf der ausgeschobenen Palette gelagerten Werkstücke mit Hilfe eines Greifers entnommen werden können. Die leere Palette wird dann wieder auf die Auflage in den Stapelbereich zurückgeschoben und durch eine Hubeinrichtung für den unteren Teilstapel von der hiefür aus dem Stapelbereich verlagerten Auflage gegen den oberen Teilstapel angehoben, um mit der zuletzt abgearbeiteten Palette den oberen Teilstapel von seiner Abstützung anzuheben und sie aus dem Stapelbereich auszuschwenken, so daß der gesamte Palettenstapel um eine Palette abgesenkt und der um die unterste Palette verringerte obere Teilstapel nach dem Einschwenken der Abstützung auf dieser abgestellt werden kann. Die oberste Palette des unteren Teilstapels wird somit durch die zuletzt unterste Palette des oberen, mit Werkstücken beladenen Teilstapels gebildet und kann auf die zu diesem Zweck zurück in den Stapelbereich verlagerte Auflage für die seitlich ausschiebbare Palette abgelegt werden.

Der Erfindung liegt somit die Aufgabe zugrunde, eine Vorrichtung zum Handhaben von auf stapelbaren Paletten gelagerten Werkstücken der eingangs geschilderten Art mit einfachen konstruktiven Mitteln so auszugestalten, daß der Platzbedarf im wesentlichen auf die zur Aufnahme eines Palettenstapels erforderliche Grundfläche beschränkt werden kann, ohne die Handhabung der Werkstücke durch den Greifer zu beeinträchtigen.

Die Erfindung löst die gestellte Aufgabe dadurch, daß die beiden Palettenstapel mit Abstand übereinander vorgesehen sind, daß der Greifer im Abstandsbereich zwischen den beiden Palettenstapeln verfahrbar ist und daß die Palettenübergabeeinrichtung aus einer Hubeinrichtung für den unteren Palettenstapel und einer wahlweise zurückziehbaren Auflage für den oberen Palettenstapel besteht, wobei sich der größte Hub der Hubeinrichtung zumindest bis zur Auflage für den oberen Palettenstapel erstreckt.

Mit Hilfe einer solchen Vorrichtung kann zunächst der Palettenstapel mit den zu bearbeitenden Werkstücken über die Hubeinrichtung soweit angehoben werden, daß dieser den oberen Stapel bildende Palettenstapel auf der zugehörigen Auflage abgestützt werden kann, die zu diesem Zweck in ihre Arbeitsstellung gebracht werden muß. Von diesem oberen Palettenstapel mit den zu bearbeitenden Werkstücken kann dann die jeweils unterste Palette in an sich bekannter Weise von der Hubeinrichtung bzw. dem bereits auf der Hubeinrichtung gebildeten Palettenstapel übernommen werden, indem die Hubeinrichtung mit dem gegebenenfalls bereits gebildeten unteren Palettenstapel an den oberen Palettenstapel angestellt wird, so daß der aus dem oberen und unteren Stapel gebildete Gesamtstapel nach dem Zurückziehen der Auflage für den oberen Stapel auf der Hubeinrichtung aufruht und um die Höhe einer Palette abgesenkt werden kann, bevor die zurückgezogene Auflage für den oberen Stapel wieder in die Arbeitsstellung gebracht wird, in der sie ein weiteres Absenken des oberen Stapels mit der sich abwärts bewegenden Hubeinrichtung verhindert. Die Abwärtsbewegung der Hubeinrichtung wird beendet, wenn die vom oberen Stapel neu übernommene Palette die für die Handhabung der auf ihr gelagerten Werkstücke durch den Greifer vorgesehene Höhenlage erreicht hat. Mit Hilfe des Greifers, der in den Zwischenraum zwischen dem unteren und dem oberen Palettenstapel einfährt können die zu bearbeitenden Werkstücke der obersten Palette des unteren Stapels erfaßt und an einen entsprechenden Förderer weitergegeben werden, wobei die durch die Werkstückentnahme gebildeten Leerstellen mit bereits bearbeiteten Werkstücken aufgefüllt werden können, die vom Greifer auf der Palette abgesetzt werden. Sind alle zu bearbeitenden Werkstücke durch bearbeitete Werkstücke ersetzt, so wird der untere Stapel über die Hubeinrichtung gegen den oberen angehoben, um die unterste Palette des oberen Stapels in der bereits beschriebenen Art und Weise zu übernehmen. Durch die geschilderte Maßnahme gelingt es daher, den Platzbedarf für eine solche Handhabungsvorrichtung im wesentlichen auf die Grundfläche eines Palettenstapels zu beschränken, ohne die Handhabung der einzelnen Werkstücke durch den Greifer zu beeinträchtigen.

Die Auflage für den oberen Palettenstapel kann unterschiedlich ausgebildet sein, weil es lediglich darauf ankommt, eine Auflage vorzusehen, die vom Stapel zurückgezogen werden kann, um vom oberen Stapel jeweils die unterste Palette über die Hubeinrichtung für den unteren Stapel abnehmen zu können. Besonders vorteilhafte Konstruktionsverhältnisse ergeben sich allerdings in diesem Zusammenhang, wenn die Auflage für den oberen Palettenstapel aus einer die jeweils unterste Palette des Stapels zumindest an zwei gegenüberliegenden Seiten umfassenden Klemmeinrichtung besteht. In diesem Fall kann der obere Palettenstapel in einfacher Weise zur Abnahme der jeweils untersten Palette freigegeben werden, wobei sich für den um eine Palette verringerten Stapel aufgrund der Klemmung an zwei gegenüberliegenden Seiten wieder eine vorteilhafte Halterung ergibt.

Damit die vorgegebene Lage der einzelnen Werkstücke auf den Paletten durch den Greifer mit ausreichender Genauigkeit zum Erfassen der Werkstücke angesteuert werden kann, muß für eine entsprechende Ausrichtung der einzelnen Paletten gesorgt werden. Zu diesem Zweck können zwischen den Paletten der Stapel vorteilhaft in Zentrierausnehmungen der Paletten eingreifende Zentrierstücke vorgesehen sein, so daß sich beim Ablegen der einzelnen Paletten aufeinander eine gegenseitige Palettenzentrierung ergibt. Besonders einfache Konstruktionsverhältnisse erreicht man, wenn die Zentrierausnehmungen aus im Querschnitt V-förmigen Nuten bestehen und wenn die Zentrierstücke eine kreiszylindrische Form aufweisen. Die V-förmigen Zentrierausnehmungen stellen im Zusammenhang mit kreiszylindrischen Zentrierstücken, vorzugsweise Rundhölzern, eine spielfreie Selbstzentrierung sicher.

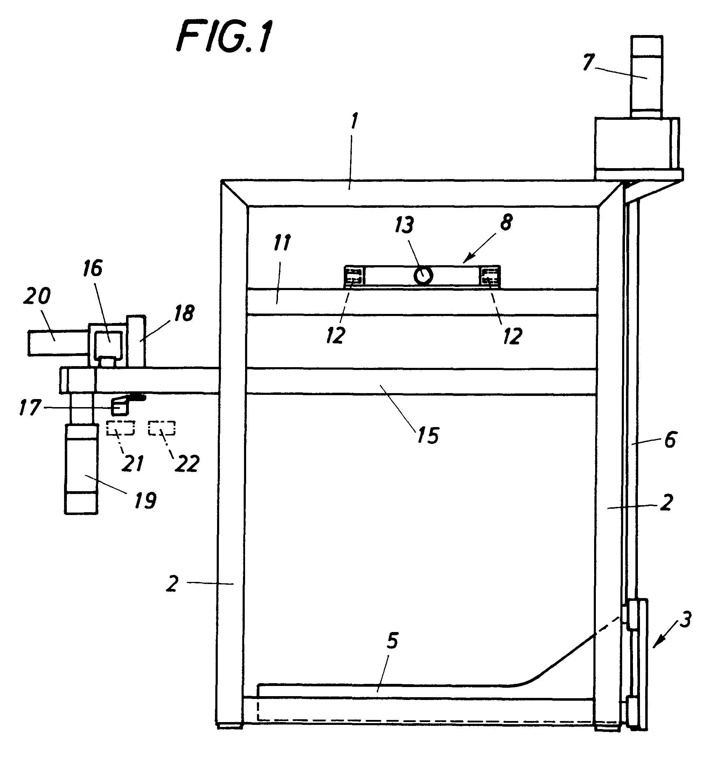

In der Zeichnung ist der Erfindungsgegenstand beispielsweise dargestellt. Es zeigen
- Fig. 1: eine erfindungsgemäße Vorrichtung zum Handhaben von auf stapelbaren Paletten gelagerten Werkstücken in einer schematischen Seitenansicht,
- Fig. 2: diese Vorrichtung in einer Stirnansicht,

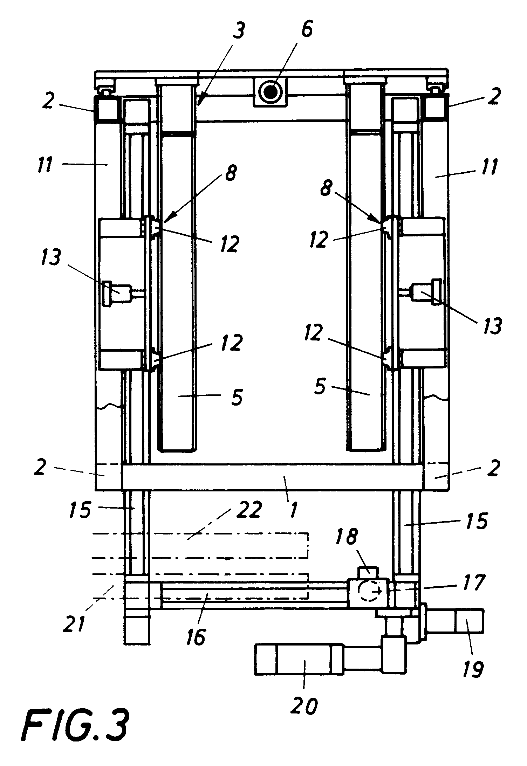

- Fig. 3: diese Vorrichtung in einer teilweise aufgerissenen Draufsicht,

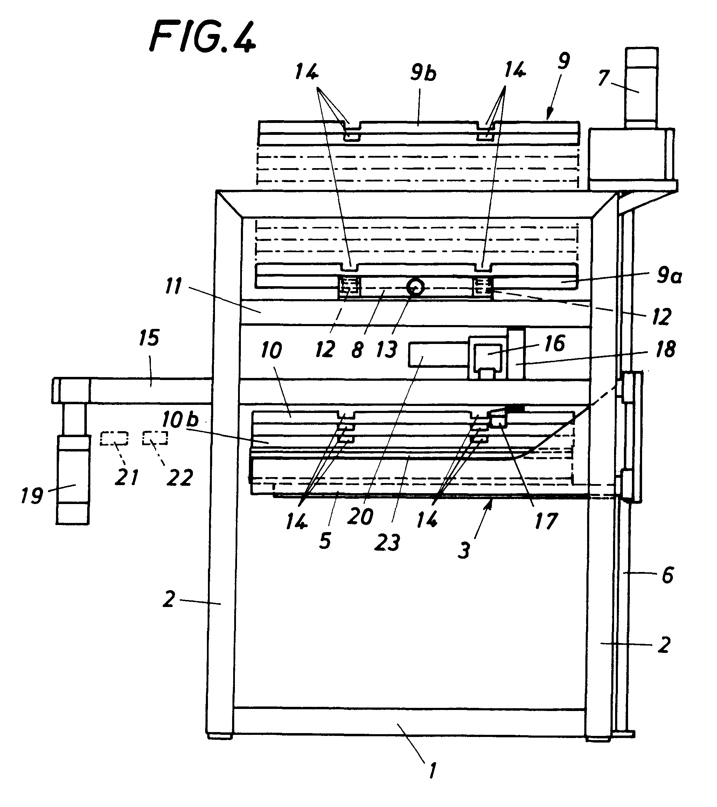

- Fig. 4: die Vorrichtung in einer Arbeitsstellung mit zwei übereinander angeordneten Palettenstapeln in einer der Fig. 1 entsprechenden Seitenansicht,

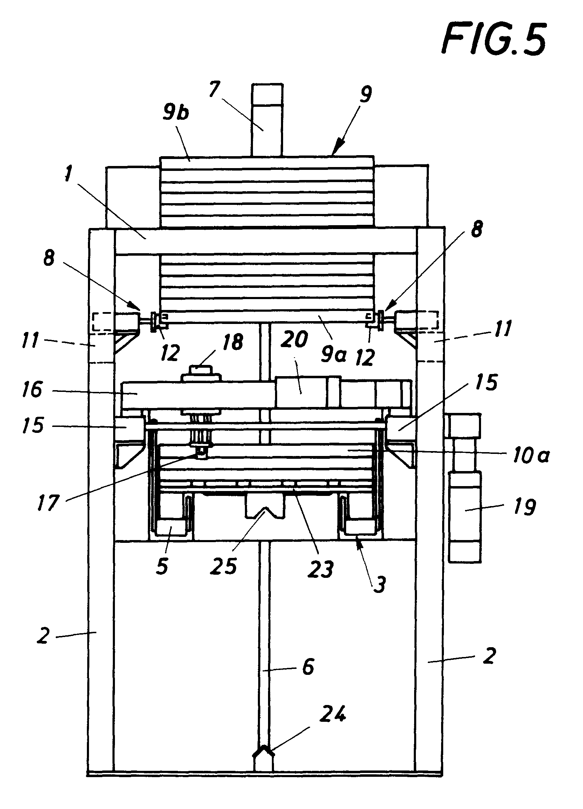

- Fig. 5: die Arbeitsstellung der Vorrichtung nach Fig. 4 in einer stirnseitigen Ansicht und
- Fig. 6: die Zentriereinrichtung für die Paletten eines Stapels im Querschnitt in einem größeren Maßstab.

Die dargestellte Vorrichtung zum Handhaben von auf stapelbaren Paletten gelagerten Werkstücken weist ein Gestell 1 mit vier Ecksäulen 2 auf, zwischen denen eine Hubeinrichtung 3 für einen Palettenstapel 4 vorgesehen ist, die mit einer Hubgabel 5 zur Aufnahme des Palettenstapels 4 versehen ist. Diese an zwei Ecksäulen 2 geführte Hubgabel 5 kann mit Hilfe eines Spindeltriebes 6, der von einem Motor 7 angetrieben wird, im Gestell 1 auf- und abbewegt werden. Der größte Hub der Hubeinrichtung 3 erstreckt sich zumindest bis zu einer Auflage 8 für den oberen von zwei aus dem Palettenstapel 4 gebildeten Teistapeln 9 und 10. Diese Auflage 8 ist an seitlichen Verbindungsträgern 11 der Ecksäulen 2 angeordnet und besteht aus einer die jeweils unterste Palette 9a des Teilstapels 9 an zwei gegenüberliegenden Seiten umfassenden Klemmeinrichtung, die gegen die unterste Palette 9a vorragende Haltegabeln 12 aufweist. Mit Hilfe von Klemmzylindern 13 können die Haltegabeln 12 gegen die unterste Palette 9a vorgeschoben werden, um diese Palette 9a im Bereich seitlicher Ausnehmungen 14 zu umfassen und zwischen sich zu klemmen.

Unterhalb dieser Auflage 8 sind zwischen den seitlichen Ecksäulen 2 Längsführungen 15 für einen Schlitten 16 vorgesehen, der selbst eine Querführung für einen Greifer 17 bildet, mit dessen Hilfe auf der obersten Palette 10a des unteren, auf der Hubgabel 5 aufruhenden Teilstapels 10 gelagerte Werkstücke erfaßt werden können. Der Greifer 17 ist in herkömmlicher Weise ausgebildet und kann über einen Hubtrieb 18 in vertikaler Richtung verfahren werden. Zum Antrieb des Greifers 17 in zwei durch die Längsführungen 15 und den Schlitten 16 gebildeten Koordinatenachsen dienen Stelltriebe 19 und 20. Während der Stelltrieb 19 den Querschlitten 16 entlang der Längsführungen 15 verfährt, wird mit Hilfe des Stelltriebes 20 der Greifer 17 mit seinem Hubtrieb 18 entlang der durch den Schlitten 16 gebildeten Querführung verfahren.

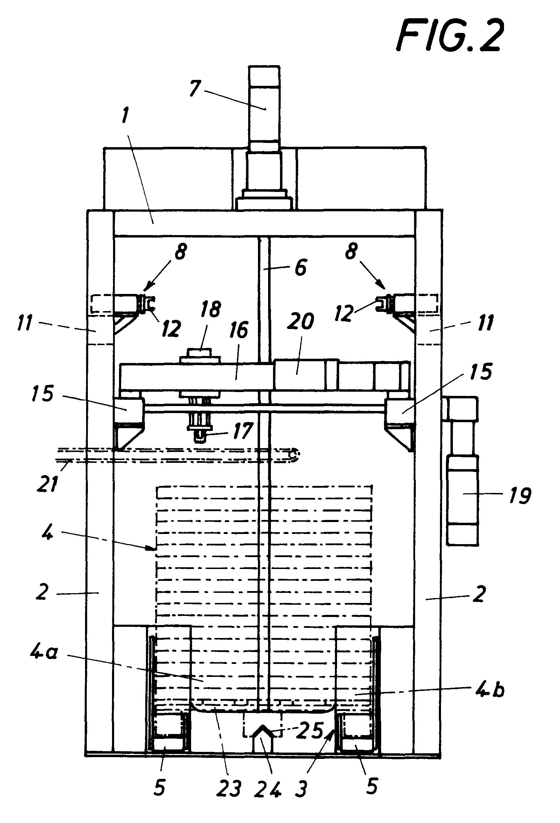

Um die zu bearbeitenden Werkstücke auf zu einem Stapel 4 gestapelten Paletten mit Hilfe des Greifers 17 handhaben zu können, wird der Palettenstapel 4 auf der abgesenkten Hubgabel 5 der Hubeinrichtung 3 abgesetzt, wie dies in der Fig. 2 strichpunktiert angedeutet ist. Danach wird der Stapel 4 über die Hubeinrichtung 3 angehoben, bis die vorletzte Palette 4a im Bereich der Auflage 8 zu liegen kommt. Diese Palette 4a wird über die Haltegabeln 12 durch ein Beaufschlagen der Klemmzylinder 13 seitlich festgeklemmt, so daß beim anschließenden Absenken der Hubgabel 5 die unterste Palette 4b des Palettenstapels 4 ebenfalls abgesenkt wird und die unterste Palette 10b des unteren Teilstapels 10 bildet, von der nunmehr die zu bearbeitenden Werkstücke mit Hilfe des Greifers 17 abgenommen und einem strichpunktiert angedeuteten Förderer 21 übergeben werden können, der die übernommenen Werkstücke einer Bearbeitungsstation zuführt. Die bearbeiteten Werkstücke werden über einen parallelen Förderer 22 von der Bearbeitungsstation zurückgefördert, um mit Hilfe des Greifers 17 wieder auf die Palette 10b aufgesetzt zu werden, und zwar an den durch die Werkstückentnahme gebildeten Leerstellen.

Sind die zu bearbeitenden Werkstücke auf der Palette 10b durch bearbeitete Werkstücke ersetzt, so wird die Hubgabel 5 nach dem Ausfahren des Greifers 17 aus dem Hubbereich des Teilstapels 10 über den Motor 7 angehoben, bis die unterste Palette 9a auf der Palette 10b aufruht. In dieser Stellung kann die Auflage 8 vom oberen Teilstapel 9 zurückgezogen und der Teilstapel 9 um die Höhe einer Palette abgesenkt werden, bevor der obere, nunmehr um die unterste Palette 9a verringerte Teilstapel 9 wieder auf der eingefahrenen Auflage 8 abgestützt wird. Die vom oberen Stapel 9 abgenommene Palette bildet die oberste Palette 10a des unteren Teilstapels 10, von der in der geschilderten Weise die zu bearbeitenden Werkstücke abgenommen und durch bearbeitete Werkstücke ersetzt werden können. Da die Paletten mit den zu bearbeitenden Werkstücken des oberen Teilstapels 9 von unten abgenommen werden und nach ihrer Abnahme jeweils die oberste Palette 10a des unteren Teilstapels 10 bilden, der schrittweise um eine Palette ergänzt wird, können alle Werkstücke des ursprünglichen Stapels 4 bearbeitet werden, wobei nach dem Abarbeiten der obersten Palette 9b des oberen Stapels 9 wiederum der ursprüngliche Palettenstapel 4 vorliegt, nunmehr allerdings mit bearbeiteten Werkstücken beladen.

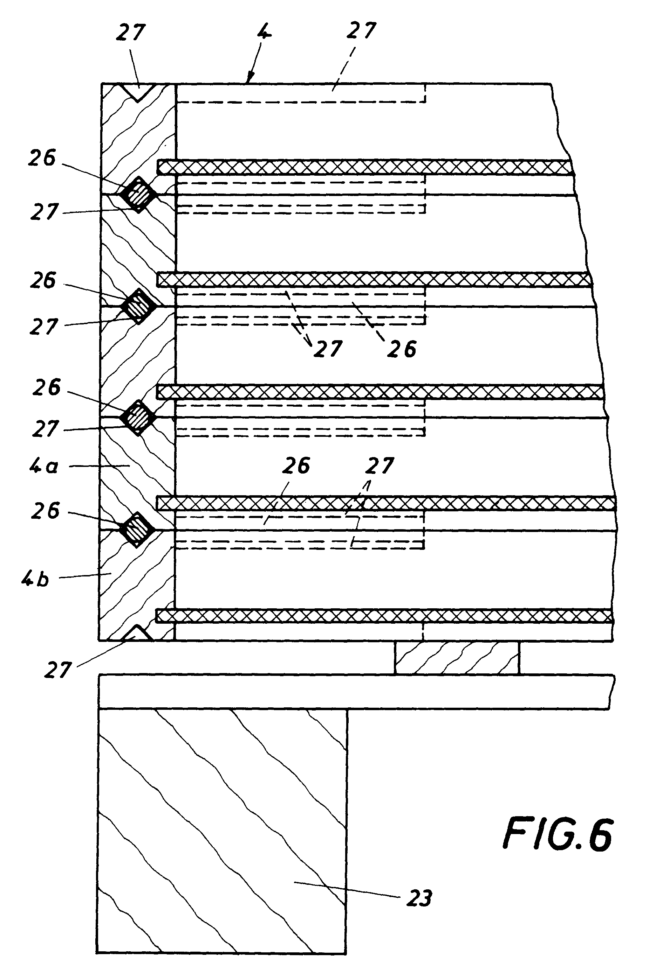

Um die Palettenstapel 4 gegenüber der Hubgabel 5 auszurichten, ist eine den Palettenstapel 4 aufnehmende Tragpalette 23 vorgesehen, die eine mit einem Zentrieransatz 24 im Bodenbereich des Gestells 1 zusammenwirkende Keilnut 25 aufweist. Die Zentrierung der Paletten untereinander erfolgt gemäß der Fig. 6 mit Hilfe von zwischen den Paletten vorgesehenen Zentrierstücken 26, die in Zentrierausnehmungen 27 eingreifen. Zur Selbstzentrierung bestehen die Zentrierausnehmungen aus im Querschnitt V-förmigen Nuten, in die Rundstäbe als Zentrierstücke eingelegt sind, was eine spielfreie, zentrierte Stapelung der einzelnen Paletten erlaubt.

## Patentansprüche

1. Vorrichtung zum Handhaben von auf stapelbaren Paletten gelagerten Werkstücken mit wenigstens einem in zwei Koordinatenachsen parallel zu den Paletten verfahrbaren Greifer (17), der die zu bearbeitenden Werkstücke von der jeweils obersten Palette (10a) eines Palettenstapels (10) abnimmt und bearbeitete Werkstücke an den durch die Werkstückentnahme entstandenen Leerstellen dieser Palette (10a) absetzt, und mit einer Palettenübergabeeinrichtung zwischen zwei Palettenstapeln (9, 10), dadurch gekennzeichnet, daß die beiden Palettenstapel (9, 10) mit Abstand übereinander vorgesehen sind, daß der Greifer (17) im Abstandsbereich zwischen den beiden Palettenstapeln (9, 10) verfahrbar ist und daß die Palettenübergabeeinrichtung aus einer Hubeinrichtung (3) für den unteren Palettenstapel (10) und einer wahlweise zurückziehbaren Auflage (8) für den oberen Palettenstapel (9) besteht, wobei sich der größte Hub der Hubeinrichtung (3) zumindest bis zur Auflage (8) für den oberen Palettenstapel (9) erstreckt.

2. Vorrichtung nach Anspruch 1, dadurch gekennzeichnet, daß die Auflage (8) für den oberen Palettenstapel (9) aus einer die jeweils unterste Palette (9a) des Stapels (9) zumindest an zwei gegenüberliegenden Seiten umfassenden Klemmeinrichtung besteht.

3. Vorrichtung nach Anspruch 1 oder 2, dadurch gekennzeichnet, daß zwischen den Paletten der Stapel (9, 10) in Zentrierausnehmungen (27) der Paletten eingreifende Zentrierstücke (26) vorgesehen sind.

4. Vorrichtung nach Anspruch 3, dadurch gekennzeichnet, daß die Zentrierausnehmungen (27) aus im Querschnitt V-förmigen Nuten bestehen und daß die Zentrierstücke (26) eine kreiszylindrische Form aufweisen.
